**Europäisches Patentamt**

**European Patent Office**

**Office européen des brevets**

(11) Veröffentlichungsnummer: **0 246 691 B1**

# (12) EUROPÄISCHE PATENTSCHRIFT

(45) Veröffentlichungstag der Patentschrift: **12.08.92**

(51) Int. Cl.5: **G01M  11/00**

(21) Anmeldenummer: **87200853.7**

(22) Anmeldetag: **11.05.87**

(54) **Vorrichtung zur Messung der Durchgangsdämpfung eines Lichtwellenleiters.**

(30) Priorität: **17.05.86 DE 3616841**

(43) Veröffentlichungstag der Anmeldung:
**25.11.87 Patentblatt  87/48**

(45) Bekanntmachung des Hinweises auf die
Patenterteilung:
**12.08.92 Patentblatt  92/33**

(84) Benannte Vertragsstaaten:
**DE FR GB IT**

(56) Entgegenhaltungen:
**EP-A- 0 150 434**
**DE-A- 3 327 668**
**US-A- 4 556 314**

**D. GLOGE: "Optical Fiber Technology", 1976,
Seiten 294-296, The Institute of Electrical
and Electronics Engineers, Inc., New York,
US**

**Wolfgang Glaser: Lichtleitertecknik, eine Einführung, VEB-Verlag Technik, Berlin 1981**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Heckmann, Siegfried, Dr.-Ing.
Tentonenstrasse 7
W-5600 Wuppertal 1(DE)**
Erfinder: **Riech, Volker, Dr.-Ing.
Gustav-Radbruch-Strasse 4
W-5090 Leverkusen 3(DE)**

(74) Vertreter: **Koch, Ingo, Dr.-Ing. et al
Philips Patentverwaltung GmbH Wendenstrasse 35 Postfach 10 51 49
W-2000 Hamburg 1(DE)**

## Beschreibung

Die Erfindung bezieht sich auf ein Verfahren zur Messung der Durchgangsdämpfung eines Lichtwellenleiters (Prüf-LWL), bei welchem von einem optischen Sender über einen Sende-LWL aus der Ausgangsfläche des Sende-LWL ausgehendes Sendelicht mit vorgegebener Lichtleistung in die Eingangsfläche des im wesentlichen koaxial zum Sende-LWL ausgerichteten Prüf-LWL gerichtet wird und bei welchem Ausgangslicht des Prüf-LWL mit einem optischen Detektor empfangen wird, wobei die Intensität des Ausgangslichts des Prüf-LWL ermittelt wird.

Ein derartiges Verfahren ist durch Optical and Quantum Electronics 10 (1978), S. 253-265 bekannt. Dabei wird der zu prüfende LWL über eine Freistrahloptik an die Sende-LWL angekoppelt. Als Sendelichtquelle dient eine LED. Eine Freistrahloptik erfordert einen hohen Justieraufwand, um den Sendelichtstrahl möglichst genau in den Prüf-LWL bündeln zu können.

Durch Steckvorrichtungen hergestellte Verbindungen von Lichtwellenleitern weisen keine konstant bleibenden Übergangsdämpfungen auf. Der je nach geometrischer Toleranzlage der Achszuordnungen beider LWL sich ergebenden Dämpfungswert schwankt erheblich. Beim Ersatz einer Freistrahloptik durch eine Steckverbindung sind deshalb die Meßwerte der Dämpfungen nicht reproduzierbar. Sie schwanken um die Streubreite der Dämpfung der Steckverbindungen.

Ein eingangs genanntes Verfahren ist auch durch die EP-A-0150434 bekannt. Dort wird eine genaue koaxiale Ausrichtung der zu koppelnden LWL verlangt. Die Enden der LWL sollen verschweißt oder über ein "index-matching"-Mittel gekoppelt werden.

Der Erfindung liegt die Aufgabe zugrunde, die Genauigkeit und Reproduzierbarkeit von Dämpfungsmessungen zu verbessern.
Die Lösung gelingt dadurch, daß zwischen der Ausgangsfläche des Sende-LWL und der Eingangsfläche des Prüf-LWL ein strahlaufweitendes Element, wie insbesondere eine defokussierende Gradientenlinse angeordnet wird, oder dadurch, daß die Eingangsfläche des Prüf-LWL und die Ausgangsfläche des Sende-LWL in einem Freiabstand von mehr als 100 μm zueinander angeordnet werden.

Wenn das aus dem Sende-LWL austretende Licht über Mittel zur Strahlaufweitung in den koaxial ausgerichteten Meß-LWL eingekoppelt wird, können sich toleranzbedingte Fehler der Koaxialität nur noch in stark reduziertem und praktisch vernachlässigbarem Ausmaß auswirken. Zwar wird in den Meß-LWL dann auch nur eine verringerte Lichtleistung eingekoppelt, jedoch ist der verbleibende empfangene Lichtanteil, z.B. bei Verwendung einer LED als Sende-Lichtquelle, völlig ausreichend, um mit üblichen optischen Detektoren, beispielsweise mit einer Photodiode, genügend große Meßsignale empfangen zu können.

Mittels den erfindungsgemäßen Verfahren werden Meßergebnisse mit einer solchen Genauigkeit erreicht, wie sie bisher nur mit der sogenannten Abschneidemethode erzielbar war, bei welcher nach einer ersten Messung eine zweite Vergleichsmessung an einem durch Abschneiden verkürzten Ende des Prüf-LWL durchgeführt werden mußte. Darauf kann man erfindungsgemäß verzichten, da mit hinreichender Genauigkeit davon ausgegangen werden kann, daß die in den Prüf-LWL eingekoppelte Lichtleistung praktisch unabhängig von der zufälligen Toleranzlage der räumlichen Ankopplung hinreichend genau einen vorgegebenen Wert hat. In der Praxis ergaben sich Schwankungen von weniger als 0,1 dB.

Auf besonders einfache Weise erreicht man die Strahlaufweitung dadurch, daß die strahlaufweitenden Mittel aus einer Halteeinrichtung für den Prüf-LWL bestehen, mittels welcher die Eingangsfläche des Prüf-LWL mit einem Abstand von mehr als 100 um zur Ausgangsfläche des Sende-LWL ausrichtbar ist. Dabei wird von der Tatsache Gebrauch gemacht, daß sich ein in einem Lichtwellenleiter geführter Strahl aufweitet, sobald er den Lichtwellenleiter in ein homogenes Medium wie z.B. Luft verläßt.

Als besonders vorteilhaft hat sich ein Abstand von 500-600 um erwiesen. Dabei ergibt sich ein guter Kompromiß zwischen erzielbarer Genauigkeit und verbleibender Lichtintensität in dem Prüf-LWL.

Natürlich sollte ein gewählter Abstand bei jeder neuen Messung in etwa genau eingestellt werden. Das geschieht vorteilhaft dadurch, daß eine Bezugsfläche der Vorrichtung vorgesehen ist, zu welcher der Prüf-LWL axial ausrichtbar ist.

Vorzugsweise ist weiterhin vorgesehen, daß der optische Sender eine inkohärente Lichtquelle, insbesondere eine LED enthält, und daß ein schmalbandiges optisches Filterelement insbesondere ein Bandpaß- oder Interferenzfilter, so angeordnet ist, daß der Sendestrahl der Lichtquelle auf der Strecke bis zum Sende-LWL durch das Filterelement leitbar ist. Dabei sollte die optische Sendeleistung der LED stabilisiert sein. Das ist mit einfachen Mitteln möglich, so daß auch bei Temperaturschwankungen oder Langzeitwirkungen keine Änderungen der gesendeten Wellenlängen oder Lichtleistungen auftreten.

Eine inkohärente Lichtquelle ist deshalb vorzuziehen, weil dann nicht wie bei Lasern Rauscheffekte durch Reflexion, Modenrauschen und Polarisation verfälschend auf die Meßergebnisse einwirken können. Eine Messung bei praktisch einer einzigen Wellenlänge mit einer schmalen Bandbreite wie bei einem Laser wird durch die Einschaltung eines passiven wellenlängenselektiven Elements ermöglicht. Dieses kann direkt hinter einer LED angeordnet sein, jedoch auch an beliebiger anderer Stelle vor dem optischen Detektor.

Da auf diese Weise extrem schmalbandiges Sendelicht verfügbar ist, ist es möglich, Dämpfungswerte bei einer exakt definierten Wellenlänge zu messen. Man erhält dann nicht, wie bei einem breitbandigeren Meßverfahren, nur solche Dämpfungswerte, die als über einen gewissen Wellenlängenbereich gemittelte Werte definiert sind. Vielmehr können im interessierenden Wellenlängenbereich eines Prüf-LWL mehrere Messungen bei verschiedenen eng benachbarten Wellenlängen durchgeführt werden, so daß die Wellenlängenabhängigkeit der Dämpfung erkennbar wird.

Normalerweise tritt die höchste Dämpfung (worst-case) bei der kürzesten Wellenlänge auf, die für den LWL laut Spezifikation zugelassen ist. Auch diesen für die Praxis wichtigen Dämpfungswert kann man zuverlässig ermitteln, insbesondere dann, wenn ein besonders präzises schmalbandiges Filter verwendet wird, dessen Mittenwellenlänge um weniger als 3 nm vom Sollwert abweicht.

Es hat sich gezeigt, daß bei einem erfindungsgemäßen Verfahren die Genauigkeit der Ankopplung eines Prüf-LWL wenig kritisch ist. Das gilt sowohl hinsichtlich der Koaxialität von Sende-LWL und Prüf-LWL als auch hinsichtlich deren axialen Abstandes.

Insgesamt ergibt sich durch die Erfindung eine einfache und unkompliziert handhabbare genau messende Vorrichtung.

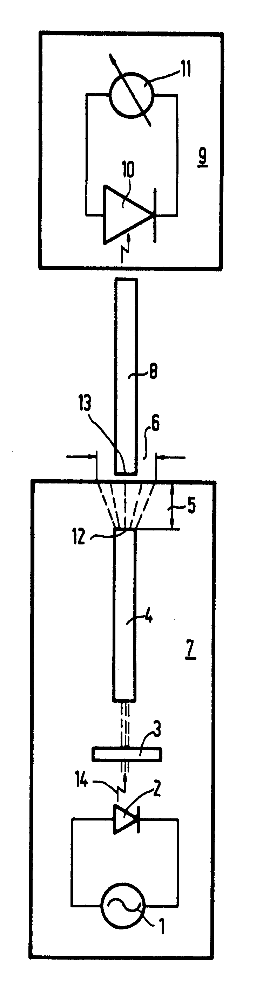

Die Erfindung wird anhand der Beschreibung eines schematisch in der Zeichnung dargestellten Ausführungsbeispiels näher erläutert.

Die Figur zeigt die relative Zuordnung der zur Messung der Durchgangsdämpfung eines Prüf-LWL erforderlichen wesentlichen Bauelemente einer Vorrichtung zur Durchführung des erfindungsgemäßen Verfahrens.

Die in der Figur dargestellte Vorrichtung zur Messung der Durchgangsdämpfung des Prüf-LWL 8 besteht aus dem Sender 7 und dem Empfänger 9, welcher üblicherweise eine Photodiode 10 und ein elektrisches Anzeigeelement 11 enthält, dessen Anzeige von der Lichtintensität abhängig ist, die aus dem Prüf-LWL 8 auf die Photodiode 10 gelangt.

Im Sender 7 ist eine LED 2 als inkohärente Sende-Lichtquelle angeordnet, welche über eine Stromversorgungsschaltung 1 derart gesteuert und geregelt wird, daß die Intensität und/oder die Mittenwellenlänge des Spektrums des gesendeten Lichts 14 einen konstanten vorgegebenen Wert hat. Von dem insbesondere mittleren Bereich des relativ breiten Wellenlängenspektrums der LED 2 wird praktisch nur eine Wellenlänge durch das Filterelement 3 in den Sende-LWL 4 hindurchgelassen. Besonders geeignet ist ein optisches Bandpaßfilter oder ein Interferenzfilter.

Die Eingangsfläche 13 des Prüf-LWL 8 ist von der Ausgangsfläche 12 des Sende-LWL 4 um einen Abstand 5 von 500-600 um entfernt, so daß der Strahldurchmesser gemäß den gestrichelten Linien in der Ebene der Eingangsfläche 13 auf einen Durchmesser 6 aufgeweitet ist.

Fehler der Koaxialität des Sende-LWL 4 und des Prüf-LWL 8 sowie der Abstände ihrer Flächen 12 und 13 wirken sich auf die Anzeige des Anzeigeelements 11 nicht merkbar aus, selbst wenn sie in der Größenordnung von einigen $\mu$m liegen. Der Pegel der in den Prüf-LWL geleiteten Lichtintensität ist stets ein konstanter Anteil der vorgegebenen und bekannten Lichtintensität der LED 2, so daß nach einmaliger Eichung des Senders 7 stets der Eingangspegel des Prüf-LWL bekannt ist. Für die Ermittlung der Durchgangsdämpfung des Prüf-LWL 8 genügt deshalb eine einzige Messung, ohne daß Vergleichsmessungen an gekürzten Abschnitten des Prüf-LWL 8 erforderlich sind.

Vorzugsweise ist der Abstandsraum zwischen den Flächen 12 und 13 ein Luftraum, jedoch könnte dieser Raum auch mit einem anderen homogenen optisch durchlässigen Medium gefüllt sein.

Wenn eine schnellere Strahlaufweitung auf einer dann kürzeren Aufweitungsstrecke erwünscht ist, können spezielle bekannte Aufweitungselemente wie insbesondere defokussierende Gradientenlinsen zwischen den Flächen 12 und 13 vorgesehen werden.

## Patentansprüche

1. Verfahren zur Messung der Durchgangsdämpfung eines Lichtwellenleiters (Prüf-LWL 8), bei welchem von einem optischen Sender (7) über einen Sende-LWL (4) aus der Ausgangsfläche (12) des Sende-LWL (4) ausgehendes Sendelicht mit vorgegebener Lichtleistung in die Eingangsfläche (13) des im wesentlichen koaxial zum Sende-LWL (4) ausgerichteten Prüf-LWL (8) gerichtet wird und bei welchem Ausgangslicht des Prüf-LWL (8) mit einem optischen Detektor (9) empfangen wird, wobei die Intensität des Ausgangslichts des Prüf-LWL (8) ermittelt wird, dadurch gekennzeichnet, daß die Eingangsfläche (13) des Prüf-LWL (8) und die Ausgangsfläche (12) des Sende-LWL (4) in einem Freiabstand von mehr als 100 $\mu$m zueinander angeordnet werden.

2. Verfahren nach Anspruch 1,

dadurch gekennzeichnet, daß die Eingangsfläche (13) des Prüf-LWL (8) und die Ausgangsfläche (12) des Sende-LWL (4) in einem Abstand von 500 bis 600 µm zueinander angeordnet werden.

3. Verfahren nach Anspruch 1 oder 2, dadurch gekennzeichnet, daß die Eingangsfläche (13) des Prüf-LWL (8) zu einer Bezugsfläche einer zur Ausübung des Verfahrens dienenden Vorrichtung ausgerichtet wird.

4. Verfahren nach Anspruch 3, dadurch gekennzeichnet, daß eine Bezugsfläche eines Steckanschlußelements verwendet wird.

5. Verfahren zur Messung der Durchgangsdämpfung eines Lichtwellenleiters (Prüf-LWL 8), bei welchem von einem optischen Sender (7) über einen Sende-LWL (4) aus der Ausgangsfläche (12) des Sende-LWL (4) ausgehendes Sendelicht mit vorgegebener Lichtleistung in die Eingangsfläche (13) des im wesentlichen koaxial zum Sende-LWL (4) ausgerichteten Prüf-LWL (8) gerichtet wird und bei welchem Ausgangslicht des Prüf-LWL (8) mit einem optischen Detektor (9) empfangen wird, wobei die Intensität des Ausgangslichts des Prüf-LWL (8) ermittelt wird, dadurch gekennzeichnet, daß zwischen der Ausgangsfläche (12) des Sende-LWL (4) und der Eingangsfläche (13) des Prüf-LWL (8) ein strahlaufweitendes Element wie insbesondere eine defokussierende Gradientenlinse angeordnet wird.

6. Verfahren nach einem der Ansprüche 1 bis 5, dadurch gekennzeichnet, daß als optischer Sender (7) eine inkohärente Lichtquelle, insbesondere eine LED (2) verwendet wird, deren Sendestrahl auf der Strecke bis zum optischen Detektor (9) durch ein schmalbandiges optisches Filterelement, insbesondere ein Bandpaß- oder Interferenzfilter (3) geleitet wird.

7. Verfahren nach Anspruch 5, dadurch gekennzeichnet, daß die optische Sendeleistung der LED stabilisiert wird.

8. Verfahren nach einem der Ansprüche 5 oder 6, dadurch gekennzeichnet, daß die Mittenwellenlänge des von der Lichtquelle (2) emittierten Spektrums stabilisiert wird.

9. Verfahren nach einem der Ansprüche 6 bis 8, dadurch gekennzeichnet, daß die Mittenwellenlänge des Filterelements um weniger als ± 3 nm vom Sollwert abweicht.

## Claims

1. A method of measuring the transmission loss of an optical fibre (test fibre 8), in which method use is made of an optical transmitter (7) to couple light issuing from the exit face (12) of the launching fibre (4) into the entrance face (13) of the test fibre (8) at a predetermined light power, which test fibre is substantially coaxially arranged relative to the launching fibre (4), and in which method light issuing from the test fibre (8) is received by an optical detector (9) to determine its intensity, characterized in that the entrance face (13) of the test fibre (8) and the exit face (12) of the launching fibre (4) are arranged relative to each other with a face interspace of more than 100 µm.

2. A method as claimed in Claim 1, characterized in that the entrance face (13) of the test fibre (8) and the exit face (12) of the launching fibre (4) are arranged relative to each other with an interspace of 500 to 600 µm.

3. A method as claimed in Claims 1 or 2, characterized in that the entrance face (13) of the fibre under test (8) is aligned with respect to a reference face of a device used to carry out the method.

4. A method as claimed in Claim 3, characterized in that the reference face of the device is formed by a connector portion.

5. A method of measuring the transmission loss of an optical fibre (test fibre), in which method use is made of an optical transmitter (7) to couple light issuing from the exit face (12) of the launching fibre (4) into the entrance face (13) of the test fibre (8) at a predetermined light power, which test fibre is substantially coaxially arranged relative to the launching fibre (4), and in which method light issuing from the test fibre (8) is received by an optical detector (9) to determine its intensity, characterized in that a beam-expansion element, notably a defocussing gradient lens, is arranged between the exit face of the launching fibre (4) and the entrance face (13) of the fibre under test (8).

6. A method as claimed in one of the Claims 1 to 5, characterized in that an incoherent light source, notably a LED (2), is used as the optical transmitter (7) whose beam is passed through a narrow band optical filer element, notably a bandpass or interference filter (3), arranged in the path to the optical detector (9).

7. A method as claimed in Claim 5, characterized in that the optical transmission power of the LED is stabilized.

8. A method as claimed in any one of the Claims 5 or 6, characterized in that the central wavelength of the spectrum emitted by the light source (2) is stabilized.

9. A method as claimed in one of the Claims 6 to 8, characterized in that the central wavelength of the filter deviates less than + or - 3 nm from the specified value.

**Revendications**

1. Procédé pour la mesure de l'affaiblissement de transmission d'un guide d'ondes lumineuses [guide d'ondes lumineuses d'essai (8)] dans lequel, un émetteur optique (7) dirige, par l'intermédiaire d'un guide d'ondes lumineuses d'émission (4), de la lumière d'émission d'une puissance lumineuse prédéfinie sortant de la face de sortie (12) du guide d'ondes lumineuses d'émission (4) dans la face d'entrée (13) du guide d'ondes lumineuses d'essai (8) orienté en substance coaxialement au guide d'ondes lumineuses d'émission (4) et dans lequel la lumière de sortie du guide d'ondes lumineuses d'essai (8) est reçue par un détecteur optique (9) et l'intensité de la lumière de sortie du guide d'ondes lumineuses d'essai (8) est déterminée, caractérisé en ce que la face d'entrée (13) du guide d'ondes lumineuses d'essai (8) et la face de sortie (12) du guide d'ondes lumineuses d'émission (4) sont disposées l'une par rapport à l'autre avec une distance libre de plus de 100 $\mu$m.

2. Procédé suivant la revendication 1, caractérisé en ce que la face d'entrée (13) du guide d'ondes lumineuses d'essai (8) et la face de sortie (12) du guide d'ondes lumineuses d'émission (4) sont disposées à une distance de 500 à 600 $\mu$m l'une de l'autre.

3. Procédé suivant la revendication 1 ou 2, caractérisé en ce que la face d'entrée (13) du guide d'ondes lumineuses d'essai (8) est orientée par rapport à une surface de référence d'un dispositif servant à exécuter le procédé.

4. Procédé suivant la revendication 3, caractérisé en ce qu'une surface de référence d'un élément d'enfichage est utilisée.

5. Procédé pour la mesure de l'affaiblissement de transmission d'un guide d'ondes lumineuses [guide d'ondes lumineuses d'essai (8)] dans lequel un émetteur optique (7) dirige, par l'intermédiaire d'un guide d'ondes lumineuses d'émission (4), de la lumière d'émission d'une puissance lumineuse prédéfinie sortant de la face de sortie (12) du guide d'ondes lumineuses d'essai (4) dans la face d'entrée (13) du guide d'ondes lumineuses d'essai (8) orienté en substance coaxialement au guide d'ondes lumineuses d'émission (4) et dans lequel la lumière de sortie du guide d'ondes lumineuses d'essai (8) est reçue par un détecteur optique (9) et l'intensité de la lumière de sortie du guide d'ondes lumineuses d'essai (8) est déterminée, caractérisé en ce qu'entre la face de sortie (12) du guide d'ondes lumineuses d'émission (4) et la face d'entrée (13) du guide d'ondes lumineuses d'essai (8) est installé un élément élargissant le rayon, comme par exemple une lentille à gradient défocalisatrice.

6. Procédé suivant l'une quelconque des revendications 1 à 5, caractérisé en ce qu'à titre d'émetteur optique (7), on utilise une source de lumière incohérente, en particulier une diode LED (2) dont le rayon d'émission est amené à traverser un élément de filtrage optique à bande étroite, en particulier un filtre passebande ou un filtre d'interférence (3), sur son trajet jusqu'au détecteur optique (9).

7. Procédé suivant la revendication 5, caractérisé en ce que la puissance d'émission optique de la diode LED est stabilisée.

8. Procédé suivant la revendication 5 ou 6, caractérisé en ce que la longueur d'onde moyenne du spectre émis par la source lumineuse (2) est stabilisée.

9. Procédé suivant l'une quelconque des revendications 6 à 8, caractérisé en ce que la longueur d'onde moyenne de l'élément de filtrage dévie de moins de ± 3 nm de la valeur de consigne.